Europäisches Patentamt

European Patent Office

Office européen des brevets

(11) Veröffentlichungsnummer: **0 179 301 B1**

## EUROPÄISCHE PATENTSCHRIFT

(45) Veröffentlichungstag der Patentschrift: **08.07.92**

(21) Anmeldenummer: **85112228.3**

(22) Anmeldetag: **26.09.85**

(51) Int. Cl.⁵: **B27N** **3/10**, B29C 67/14, D04H 13/00

(54) **Verfahren und Vorrichtung zur Herstellung von Fasermatten als Ausgangsmaterial für Pressformteile.**

(30) Priorität: **25.10.84 DE 3439033**

(43) Veröffentlichungstag der Anmeldung:
**30.04.86 Patentblatt 86/18**

(45) Bekanntmachung des Hinweises auf die
Patenterteilung:
**08.07.92 Patentblatt 92/28**

(84) Benannte Vertragsstaaten:
**DE FR IT**

(56) Entgegenhaltungen:
**DE-A- 2 845 112**
**DE-A- 3 403 670**
**GB-A- 2 000 821**

(73) Patentinhaber: **Casimir Kast GmbH & Co. KG**
**Obertsroterstrasse 2**
**W-7562 Gernsbach(DE)**

(72) Erfinder: **Nopper, Herbert**
**Zellerwiesenstrasse 3**
**W-7554 Kuppenheim(DE)**

(74) Vertreter: **Dr.-Ing. Hans Lichti Dipl.-Ing. Heiner**
**Lichti Dipl.-Phys. Dr. Jost Lempert**
**Postfach 41 07 60 Bergwaldstrasse 1**
**W-7500 Karlsruhe 41(DE)**

EP 0 179 301 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung von Fasermatten als Ausgangsmaterial für Preßformteile, indem zerfaserte Werkstoffe, vorzugsweise Abfallwerkstoffe, mit thermo- und/oder duroplastischen Bindemitteln gemischt, die Mischung zu einer ersten Vliesschicht ausgestreut, auf diese ein vorgefestigtes Gewebe, z. B. ein Polyestergewebe, mit einer zum Bindemittel der Fasern affinen, wärmeaktivierbaren Ausrüstung abgelegt, darauf eine weitere Vliesschicht aufgestreut und das so gebildete Verbundvlies unter thermischer Aktivierung der Bindemittel und der Ausrüstung zu einer Matte verdichtet wird, aus der durch Pressen bei erhöhter Temperatur Formteile herstellbar sind.

Ein derartiges Verfahren ist aus der GB-A-2 000 821 bekannt. Während einfache Fasermatten (z. B. DE-OS 28 45 112) bei Transport und Lagerung aufgrund ihrer geringen Eigenstabilität relativ empfindlich sind und infolgedessen nur in gestapelten Zuschnitten gelagert und transportiert werden können, verleiht das Gewebe bei dem eingangs genannten Verfahren der Matte eine erhöhte Stabilität und Flexibilität, so daß sie beispielsweise aufgerollt und von der Rolle anläßlich der Herstellung der Preßformteile abgenommen werden kann. Der weitere maßgebliche Vorteil solcher Verbundvliese aus Faservliesschichten mit eingelagertem Gewebe besteht darin, daß die Reißfestigkeit erheblich erhöht wird, so daß auch bei Formteilen mit tiefen Konturen das Pressen des Formteils in einem Arbeitsgang erfolgen kann und nicht - wie bei einfachen Faservliesen - ein Vorformen notwendig ist.

Ein bei diesem Verfahren verwendbares, vorgefertigtes, Gewebe, z.B. ein Polyestergewebe, muß einerseits schiebefest ausgerüstet sein, andererseits muß die Ausrüstung so gewählt sein, daß sie während der thermischen Prozesse (Wärmeaktivierung der Bindemittel bei der Mattenherstellung und Aushärten der Bindemittel beim Verpressen zum Formteil) keine negativen Effekte auf die Matte bzw. das Formteil bewirkt. Die Ausrüstung ist deshalb vorzugsweise aus einem zu den Bindemitteln für die Fasern affinen Werkstoff, z. B. aus Kunstharzen, wie Phenolharz oder dgl., gebildet. Von Nachteil ist hierbei, daß solchermaßen ausgerüstete Gewebe im Handel in nur bestimmten Qualitäten erhältlich sind, die in der Regel nicht gerade auf die Fertigung von Fasermatten bzw. Preßformteilen abgestimmt sind. Dies gilt nicht nur hinsichtlich der Zusammensetzung, sondern beispielsweise auch hinsichtlich des Flächengewichtes der Ausrüstung. Schließlich sind solche komplett ausgerüsteten Gewebe relativ teuer.

Der Erfindung liegt die Aufgabe zugrunde, das Verfahren der eingangs genannten Art dahingehend weiterzubilden, daß die Ausrüstung des eingesetzten vorgefertigten Gewebes auf die jeweilige Werkstoffzusammensetzung der Matte in einfacher Weise abgestimmt werden kann.

Diese Aufgabe wird erfindungsgemäß dadurch gelöst, daß unmittelbar vor dem Ablegen des Gewebes auf die erste Vliesschicht die Ausrüstung aus der flüssigen Phase auf das Gewebe durch Walzen oder durch Sprühen aufgebracht wird und daß die aus der flüssigen Phase auf das Gewebe aufgebrachte Ausrüstung anläßlich der thermischen Aktivierung des Verbundvlieses getrocknet und ihrerseits aktiviert wird, wobei die Ausrüstung in wässriger Phase als reine Lösung, Dispersion oder Emulsion eingeseht wird.

Somit wird die Ausrüstung des Gewebes nicht beim Gewebehersteller bzw. in speziellen Ausrüstungsbetrieben erzeugt, also ein fertig ausgerüstetes Gewebe bei der Mattenherstellung verwendet, sondern der Vorgang des Ausrüstens wird an den Ort unmittelbar vor der Zusammenführung des Gewebes und der I. Vliesschicht verlegt, um auf diese Weise ein preisgünstiges und qualitativ absolut gleichbleibendes Rohgewebe einsetzen zu können. Die Ausrüstung des Gewebes am Ort der Mattenherstellung kann dann in Anpassung an die dort gestellten physikalischen oder chemischen Anforderungen erfolgen. Dies gilt sowohl hinsichtlich der Auswahl der Ausrüstung, die auf die jeweils verwendeten Bindemittel für die Fasern abgestimmt werden muß, als auch hinsichtlich der Menge, d. h. des Flächengewichtes der Ausrüstung, um beispielsweise die Einbindung des Gewebes in die Vliesschichten bei der Wärmeaktivierung des Verbundvlieses und den von der Ausrüstung herrührenden Bindemittelanteil für das gesamte Verbundvlies bzw. das Preßformteil steuern zu können.

Dabei erfolgt die Aufbringung der Ausrüstung unmittelbar vor dem Ablegen des Gewebes auf die erste Vliesschicht, d.h. unmittelbar oberhalb der ersten Vliesschicht, so daß sich die Ausrüstung bei Ablage des Gewebes noch in flüssigem bzw. feuchtem Zustand befindet und anläßlich des Wärmeaktivierungsprozesses der Bindemittel getrocknet und zumindest teilgehärtet wird. Eventuelle Tropfen oder Nebel, die sich beim Aufsprühen bilden gelangen mit auf das Vlies und gehen nicht verloren.

Wenn die aus der flüssigen Phase auf das Gewebe aufgebrachte Ausrüstung anläßlich der thermischen Aktivierung des Verbundvlieses getrocknet und ihrerseits aktiviert wird, ergibt sich der Vorteil, daß der Trocknungsvorgang in den Wärmeaktivierungsprozeß der Bindemittel des Vlieses einbezogen wird.

Die Ausrüstung wird dabei aus der flüssigen Phase durch Walzen, vorzugsweise jedoch durch Sprühen aufgebracht, da bei einer Sprühimprägnierung eine genauere und einfache Dosierung möglich ist.

Die für die Ausrüstung verwendeten Polymere können in gelöster Form oder in wässriger Phase als reine Lösung, Dispersion oder Emulsion verwendet werden. Dabei ist der wässrigen Phase aus arbeitshygienischen und umwelttechnischen Gründen der Vorzug zu geben.

Mit Vorteil wird die Ausrüstung aus der flüssigen Phase mit einem Flächengewicht von 50 bis 60 g/m² (flüssig) auf jeder Seite des Gewebes aufgebracht, so daß sich ein Gesamtflächengewicht von 100 bis 120 g/m² ergibt. Ein solches Flächengewicht läßt sich ohne Schwierigkeiten aus wässrigen Lösungen und Emulsionen bzw. Dispersionen erreichen, die einen Feststoffgehalt an Polymeren von 40 bis 50% aufweisen.

Vorzugsweise wird die flüssige Phase der Ausrüstung vor dem Aufbringen auf das Gewebe auf mäßige Temperatur, z. B. 40 bis 60°C vorgewärmt. Durch die Vorwärmung wird eine von der Umgebungstemperatur unabhängige, gleichmäßige Viskosität für den Prozeß des Auftragens erhalten. Da die Viskosität entsprechend der Vorwärmtemperatur abnimmt, die Sprühfähigkeit also verbessert wird, kann zugleich auf eine sonst höhere Wasserverdünnung verzichtet werden, was sich wiederum beim Trockenprozeß als Einsparung auswirkt. Wird die wässrige Phase vorgewärmt, so kann das Flächengewicht der aufgetragenen Ausrüstung auf ca. 40 g/m² (flüssig) auf jeder Seite des Gewebes vermindert werden.

Bei einer üblichen Bahngeschwindigkeit des Verbundvlieses von ca. 6 m/min und einer Temperatur zwischen 100 und 130°C während der Wärmeaktivierungsphase wird die Ausrüstung des Gewebes im notwendigen Ausmaß getrocknet und gehärtet.

Für die Ausrüstung lassen sich alle mit den Bindemitteln der Fasern verträglichen Bindemittel, in erster Linie Kunstharze oder Latices einsetzen. Vorzugsweise wird eine wässrige Phenolharz-Lösung, aus beispielsweise alkalisch eingestellten wärmehärtbaren Resolen verwendet. Diese Ausrüstung ist nicht nur vom gleichen Typ, wie die bei Faservliesen der genannten Art üblicherweise verwendeten Bindemittel, sondern auch mit anderen Harzen, wie Melaminharzen oder dgl. problemlos gemeinsam zu verarbeiten. Eine solche Phenolharz-Lösung hat den weiteren Vorteil eines relativ weiten Vernetzungsbereichs, was die Möglichkeit eröffnet, anläßlich der Einbindung des Gewebes in die Vliesschichten zunächst nur eine Teilhärtung vorzunehmen derart, daß die Flexibilität des Gewebes beibehalten bleibt, die verdichtete Matte also weiterhin aufrollbar ist, während die Endaushärtung der Phenolharz-Ausrüstung erst beim Pressen des Formteils erfolgt.

Statt einer Phenolharz-Lösung kann auch ein Styrol-Butadien-Latex (SBR-Latex) in gegebenenfalls Phenol- oder Melaminharz-, Polyvinyl- oder Polymethacrylat-modifizierter Form verwendet werden. Zur Unterstützung der Vernetzung des SBR-Latex können Vernetzer, wie Zinkoxid oder dgl. eingesetzt werden. Üblicherweise wird man hierauf jedoch verzichten können. Diese Latices haben eine hohe Bindefestigkeit zu fast allen Fasern synthetischer oder biologischer Herkunft.

Als weitere Stoffe, die sich für die Ausrüstung eignen, seien Butadien-Acrylnitril oder Methacrylat-Styrol Mischpolymerisate in gegebenenfalls modifizierter Form, erwähnt.

In weiterer vorteilhafter Abwandlung kann die Ausrüstung in flüssiger Phase zusätzlich ein Treibmittel zur Schaumharzbildung enthalten, dessen Zersetzungstemperatur oberhalb der Temperatur bei der Wärmeaktivierung des Verbundvlieses, beispielsweise bei 120 bis 130°C liegt.

Dieses in die flüssige Phase eingearbeitete Treibmittel wird beim Aufsprühen und anschließenden Aktivieren des Harzes Teil der Ausrüstung des Gewebes, wobei es während des Wärmeaktivierungsprozesses aufgrund seiner höheren Zersetzungstemperatur keine Wirkung entfaltet. Erst beim Pressen des Formteils, das bei Temperaturen oberhalb 150°C erfolgt, beginnt die Zersetzung des Treibmittels und die Aufschäumung der Ausrüstung, die somit nicht nur für eine Einbindung des Gewebes in der Matte bzw. im Formteil sorgt, sondern auch eine Erhöhung des Hohlraumvolumens im Formteil und somit eine Dichtereduzierung und Verbesserung der Dämmwerte ermöglicht. Die technologischen Möglichkeiten bei der Verwendung von Schaumharzen als Bindemittel sind in der DE-OS 31 27 846 beschrieben und bedürfen hier keiner weiteren Erläuterung. Hierbei kann es sich empfehlen, die Ausrüstung mit einem Flächengewicht größer 20 bis 30g/m² (fest), also mit einem über das für die Einbindung des Gewebes in die Vliesschichten notwendige Maß hinausgehenden Flächengewicht aufzutragen, um die Durchdringung der Fasern mit dem Schaumharz zu verstärken.

Zur Durchführung des Verfahrens kann ausgegangen werden von einer bekannten Vorrichtung (P 34 03 670.9) mit einer die Mischung aus zerfaserten Werkstoffen und Bindemittel auf ein luftdurchlässiges Transportband austragenden ersten Streueinrichtung zur Erzeugung der ersten Vliesschicht, einer dahinter befindlichen Egalisiereinrichtung, einer Zuführeinrichtung zum losen Ablegen des Gewebes auf der ersten egalisierten Vliesschicht, einer dahinter angeordneten zweiten Streueinrichtung zur Erzeugung der zweiten Vliesschicht, einer dieser nachgeschalteten Egalisiereinrichtung, einer dahinter und oberhalb des Transportbandes angeordneten Einrichtung zum Durchleiten von Heißluft durch das Verbundvlies und danach angeordneten Druckwalzen zum Verdichten des Verbundvlieses zu einer Matte sowie einer unterhalb des Transportes im Bereich der Streueinrichtungen und der Heißlufteinrichtung angeordneten Saugeinrichtung zum Durchsaugen von Luft durch die Vliesschichten bzw. das Verbundvlies. Diese Vorrichtung wird für das erfindungsgemäße Verfahren dadurch erweitert, daß der Zuführeinrichtung für das Gewebe eine Einrichtung zum Auftragen der Ausrüstung in flüssiger Phase zugeordnet ist, z.B. in Form einer Sprüheinrichtung, die beispielsweise mehrere quer zur Laufrichtung des Transportbandes mit Abstand voneinander angeordnete Flachdüsen aufweist.

Nachstehend ist die Erfindung anhand eines in der Zeichnung schematisch wiedergegebenen Ausführungsbeispiels beschrieben.

In der Zeichnung zeigen:

Figur 1, 2    eine schematische Seitenansicht der Anlage zur Mattenherstellung;

Figur 3    eine schematische Seitenansicht der Anlage zur Herstellung von Preßformteilen von einer Mattenrolle und

Figur 4    eine Alternative zur Herstellung von Matten-Zuschnitten.

Die Anlage weist zunächst ein Transportband 1 auf, das luftdurchlässig ist, z. B. aus einem Gewebe oder Gitter gebildet ist. Oberhalb des Einlaufs des Transportbandes 1 in die Anlage ist eine erste Streueinrichtung 2 angeordnet, die ein Fasermaterial aufnimmt und über einen Streukopf 3 auf das Transportband 1 zur Bildung einer ersten Vliesschicht 4 abgibt. Hinter der Streueinrichtung 2 sitzt eine fräserartige Egalisiereinrichtung 5, die die erste Vliesschicht 4 auf eine gleichmäßige Dicke bringt.

In Förderrichtung hinter der Egalisiereinrichtung 5 befindet sich eine Zuführeinrichtung zum Ablegen eines endlosen Gewebes bzw. Gitters 7 auf die erste Vliesschicht 4. Das Gewebe bzw. Gitter 7 befindet sich auf einer Vorratsspule 8 der Zuführeinrichtung, von der es mittels Zugwalzen 9 abgezogen wird. Dabei läuft das Gewebe bzw. Gitter 7 über Leitwalzen 10 und eine Spannwalze 11. Der Antrieb der Zugwalzen 9 wird in bezug auf die Geschwindigkeit des Transporbandes 1 so abgestimmt, daß das Gewebe bzw. Gitter 7 im Bereich 12 unterhalb des Zugwalzen 9 lose abfällt, so daß es kräftefrei auf der ersten Vliesschicht 4 abgelegt wird. Im Bereich 12 ist eine Abtasteinrichtung 13 angeordnet, die Teile der Anlage stillsetzt, wenn im Bereich der Abtasteinrichtung 13 kein Gewebe bzw. Gitter vorhanden, also beispielsweise die Spule 8 leer ist. Ferner ist im Bereich 12 hinter den Zugwalzen 9 eine Sprüheinrichtung 6 angeordnet, die beispielsweise eine Reihe von Flachdüsen 6a bzw. 6b an jeder Seite des ablaufenden Gewebes 7 aufweist und mittels der die Ausrüstung aus der flüssigen Phase auf das Gewebe 7 aufgesprüht wird. Die Flachdüsen 6a bzw. 6b befinden sich vorzugsweise unmittelbar oberhalb der ersten Vliesschicht 4 und sind mit Vorteil in Richtung auf die Vliesschicht geneigt. Hinter der Gewebeablage ist eine weitere Streueinrichtung 14 angeordnet, die wiederum Fasern aufnimmt und über einen Streukopf 15 zu einer gleichmäßigen zweiten Vliesschicht 16 abgibt. Auch hinter der Streueinrichtung 14 ist wiederum eine fräserartige Egalisiereinrichtung 17 angeordnet.

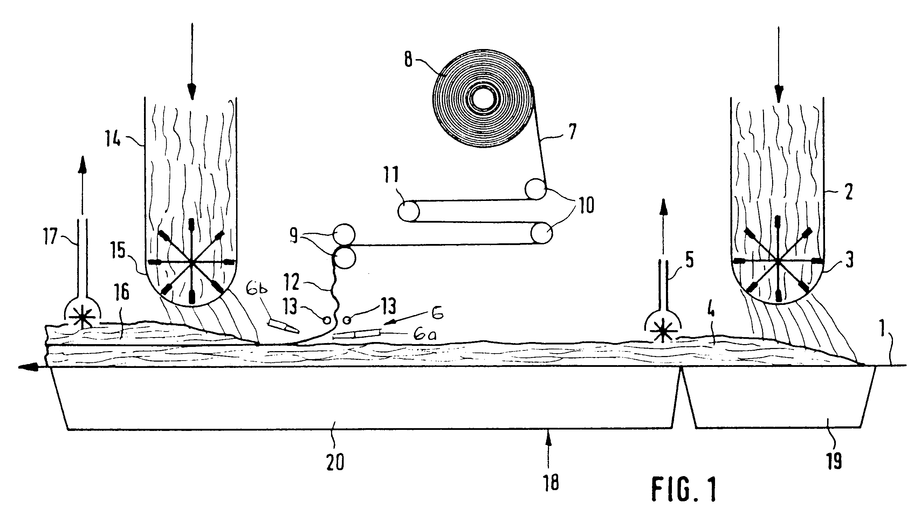

Wie Figur 1 ferner erkennen läßt, ist unterhalb des gesamten Transportbandes 1 zumindest bis zur zweiten Egalisiereinrichtung 17 eine Saugeinrichtung 18 angeordnet, die beim wiedergegebenen Ausführungsbeispiel aus zwei Saugkästen 19 und 20 besteht. Diese Saugeinrichtung 18 sorgt für eine feste Auflage der ersten Vliesschicht 4 auf dem Transportband 1, für die Beibehaltung der Vliesdikke, für das Ansaugen des Gewebes bzw. Gitters 7 auf die erste Vliesschicht 4 und schließlich für ein Haften der zweiten Vliesschicht 16 auf dem Gitter bzw. Gewebe 7 und der ersten Vliesschicht 4.

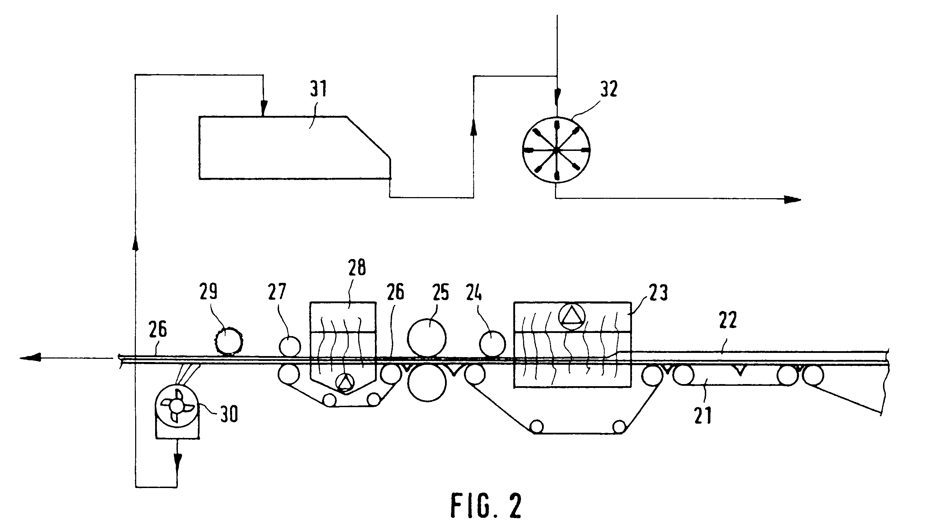

Das Verbundvlies 22 erreicht schließlich (s. Figur 2) eine Bandwaage 21, die die spezifische Flächenlast mißt und entsprechend dem Sollwert die zweite Egalisiereinrichtung 17, gegebenenfalls auch die erste Egalisiereinrichtung 5 steuert. Das Verbundvlies 22 erreicht schließlich eine Heißlufteinrichtung 23, mittels der Heißluft durch das Verbundvlies 22 hindurchgedrückt oder hindurchgesaugt wird, um die Bindemittel für die Fasern und die Ausrüstung des Gewebes zu aktivieren. Hinter der Heißlufteinrichtung 23 sind eine Vorpreßwalze 24 und ein Preßkalander 25 angeordnet, die das Verbundvlies auf die gewünschte Enddicke reduzieren. Das Verbundvlies 22 verläßt den Preßkalander 25 als Matte 26, die mittels Transportwalzen 27 durch eine Kühlstation 28 bewegt wird. Hinter den Transportwalzen 27 befindet sich eine Besäumungseinrichtung 29, die die Längsränder der Matte 26 egalisiert. Die anfallenden Randstreifen können mittels einer Schneidmühle 30 zerkleinert und anschließend in einem Abfallbunker 31 eingebunkert werden. Aus dem Abfallbunker 31 kann das Material bei Bedarf einer zentralen Zerkleinerungsmühle 32, die der Herstellung des den Streueinrichtungen 2 und 14 zugeführten Faserstoffs dient, abgezogen werden.

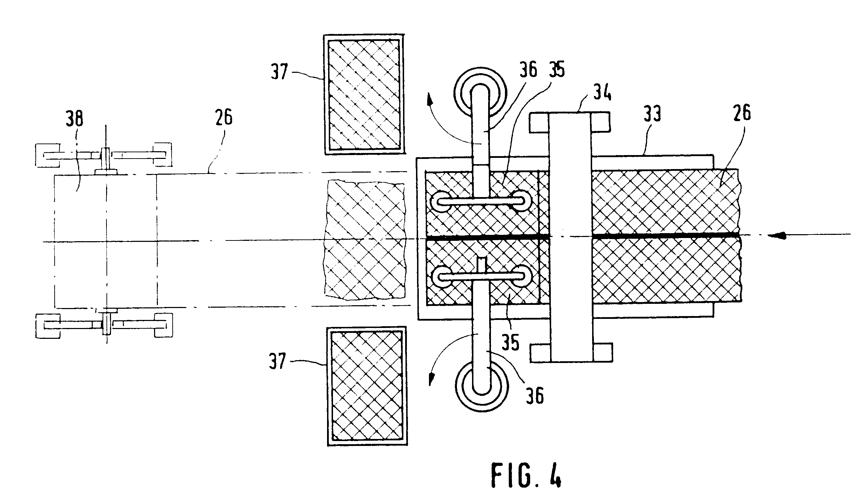

Die besäumte und zur Weiterverarbeitung vorbereitete Matte 26 kann anschließend zu einer Rolle oder einem Wickel aufgespult werden oder aber, wie Figur 4 zeigt, in einzelne Zuschnitte zerlegt werden. Zu diesem Zweck läuft die Matte 26 auf einen Zuschneidetisch 33 mit einem Querschneider 34. Gleichzeitig oder zuvor ist die Matte 26 in Längsrichtung aufgetrennt worden, so daß hinter dem Querschneider 34 je zwei Zuschnitte 35 gebildet werden, die mittels schwenkbarer Saugheber 36 auf seitliche Stapel 37 abgelegt werden. Figur 4 zeigt ferner mit strichpunktierten Linien die Alternative, bei der die Matte 26 zu einer Rolle 38 aufgewickelt wird.

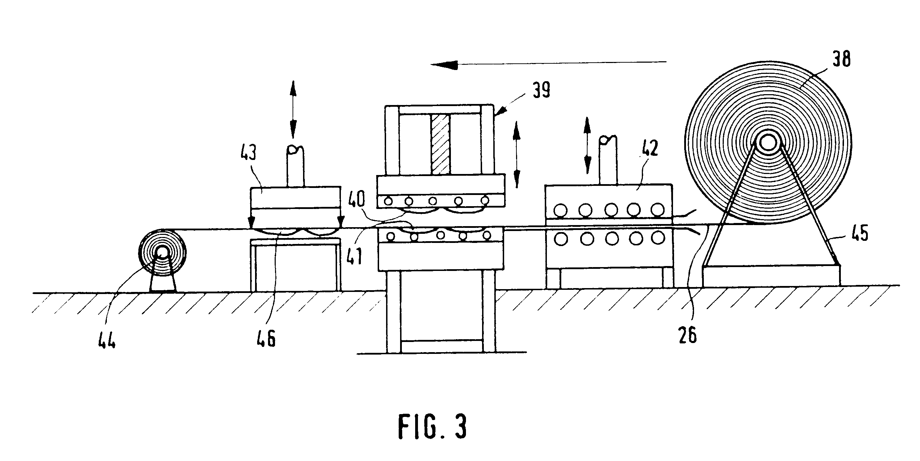

Figur 3 zeigt eine schematische Ansicht einer Ausführungsform zur Herstellung von Preßformteilen aus einer zu einer Rolle 38 aufgewickelten Matte 26. Die Anlage weist als wesentlichen Bestandteil eine Formpresse 39 mit einem beheizten Oberwerkzeug 40 und einem beheizten Unterwerkzeug 41 auf. Beim gezeigten Ausführungsbeispiel wird der Preßhub vom Oberwerkzeug 40 durchgeführt. Vor der Formpresse 39 ist ein Wärmeofen 42 angeordnet und hinter der Formpresse 39 befindet sich eine Trenneinrichtung 43 sowie dahinter eine Wickeleinrichtung 44. Die Mattenrolle 38 ist auf einem Spulengestell 45 vor dem Wärmeofen 42 gelagert. Die Matte 26 wird von der Rolle 38 mittels der Wickeleinrichtung 44 taktweise abgezogen. Sie durchläuft zunächst den Wärmeofen 42 zur Aktivierung der Bindemittel und gelangt im nächsten Arbeitstakt in die Formpresse 39. Die Formwerkzeuge 40, 41 werden geschlossen, so daß in der Matte ein Formteil ausgeformt wird, das aufgrund seiner noch vorhandenen Einbindung in das sie umgebende Mattenmaterial beim nächsten Arbeitstakt in die Trenneinrichtung 43 gelangt. Dort wird das Formteil 46 aus der Matte durch einen Stanzvorgang herausgetrennt und seitlich weggeführt, während die Restmatte mittels der Wickeleinrichtung 44 wiederum zu einer Rolle aufgewickelt wird. Dieses Material kann, wie bereits mit Bezug auf Figur 2 für die Randstreifen beschrieben, einer Zerkleinerungseinrichtung und anschließend der Anlage zur Faserstoffherstellung zugeführt werden.

**Patentansprüche**

1.  Verfahren zur Herstellung von Fasermatten als Ausgangsmaterial für Preßformteile, indem zerfaserte Werkstoffe mit thermo- und/oder duroplastischen Bindemitteln gemischt, die Mischung zu einer ersten Vliesschicht ausgestreut, auf diese ein vorgefertigtes Gewebe, z.B. ein Polyestergewebe, mit einer zum Bindemittel der Fasern affinen, wärmeaktivierbaren Ausrüstung abgelegt, darauf eine weitere Vliesschicht aufgestreut und das so gebildete Verbundvlies unter thermischer Aktivierung der Bindemittel und der Ausrüstung zu einer Matte verdichtet wird, aus der durch Pressen bei erhöhter Temperatur Formteile herstellbar sind, dadurch gekennzeichnet, daß die Ausrüstung aus der flüssigen Phase unmittelbar vor dem Ablegen des Gewebes (7) auf die erste Vliesschicht (4) durch Walzen oder durch Sprühen auf das Gewebe (7) aufgebracht wird und daß die aus der flüssigen Phase auf das Gewebe (4) aufgebrachte Ausrüstung anläßlich der thermischen Aktivierung des Verbundvlieses getrocknet und ihrerseits aktiviert wird,

    wobei die Ausrüstung in wässriger Phase als reine Lösung, Dispersion oder Emulsion eingesetzt wird.

2.  Verfahren nach Anspruch 1, dadurch gekennzeichnet, daß die Ausrüstung mit einem Flächengewicht von 50 bis 60 $g/m^2$ (flüssig) auf jeder Seite des Gewebes aufgebracht wird.

3.  Verfahren nach Anspruch 1 oder 2, dadurch gekennzeichnet, daß wässrige Emulsionen bzw. Dispersionen der Ausrüstung mit einem Feststoffgehalt von 40 bis 50 % verwendet werden.

4.  Verfahren nach einem der Ansprüche 1 bis 3, dadurch gekennzeichnet, daß die flüssige Phase der Ausrüstung vor dem Aufbringen auf das Gewebe auf mäßige Temperatur, z.B. 40 bis 60 °C, vorgewärmt wird.

5.  Verfahren nach Anspruch 4, dadurch gekennzeichnet, daß das Flächengewicht der aufgetragenen Ausrüstung bei ca. 40 $g/m^2$ (flüssig) auf jeder Seite des Gewebes liegt.

6.  Verfahren nach einem der Ansprüche 1 bis 5, dadurch gekennzeichnet, daß die Wärmeaktivierung des Verbundvlieses bei einer Bahngeschwindigkeit des Verbundvlieses von ca. 6 m/min bei einer Temperatur zwischen 100 und 130 °C erfolgt.

7.  Verfahren nach einem der Ansprüche 1 bis 6, dadurch gekennzeichnet, daß für die Ausrüstung eine wässrige Phenolharz-Lösung verwendet wird.

8.  Verfahren nach einem der Ansprüche 1 bis 7, dadurch gekennzeichnet, daß die Phenolharz-Ausrüstung bei der Wärmeaktivierung des Verbundvlieses unter Beibehaltung der Flexibilität des Gewebes teilgehärtet wird.

9.  Verfahren nach einem der Ansprüche 1 bis 8, dadurch gekennzeichnet, daß die Endaushärtung der Phenolharz-Ausrüstung beim Pressen des Formteils erfolgt.

10. Verfahren nach einem der Ansprüche 1 bis 6, dadurch gekennzeichnet, daß für die Ausrüstung ein Styrol-Butadien-Latex (SBR-Latex) verwendet wird.

11. Verfahren nach Anspruch 10, dadurch gekennzeichnet, daß Phenol- oder Melaminharz-, Polyvinyl- oder Polymethacrylat-modifizierte SBR-Latices verwendet werden.

12. Verfahren nach einem der Ansprüche 1 bis 6, dadurch gekennzeichnet, daß für die Ausrüstung der Butadien-Acrylnitril Mischpolymerisate in gegebenenfalls modifizierter Form verwendet werden.

13. Verfahren nach einem der Ansprüche 1 bis 6, dadurch gekennzeichnet, daß für die Ausrüstung Methacrylat-Styrol Mischpolymerisate verwendet werden.

14. Verfahren nach einem der Ansprüche 1 bis 3, dadurch gekennzeichnet, daß die Ausrüstung in flüssiger Phase zusätzlich ein Treibmittel zur Schaumharzbildung enthält, dessen Zersetzungstemperatur oberhalb der Temperatur bei der Wärmeaktivierung des Verbundvlieses, beispielsweise bei 120 bis 130°C liegt, und daß der Auftrag der Ausrüstung gegebenenfalls mit einem Flächengewicht größer 20 bis 30 g/m² (fest) erfolgt.

## Claims

1. Method for making fibre mats as starting materials for moulded articles, in that defibrated materials are mixed with thermoplastic and/or thermosetting binders, the mixture is spread out to form a first fleece layer, on which is placed a prefabricated fabric, e.g. a polyester fabric with a heat-activatable finish having an affinity with the binder of the fibres and on which is spread a further fleece layer and the resulting composite fleece is compressed to a mat accompanied by the thermal activation of the binder and the finish and from which by moulding at elevated temperature moulded articles are produced, characterized in that the finish from the liquid phase is applied by rolling or spraying to the fabric (7) immediately prior to the placing of the latter on the first fleece layer (4) and that the finish applied from the liquid phase to the fabric (4) is dried and in turn activated on the occasion of the thermal activation of the composite fleece and the finish in the aqueous phase is used as a pure solution, dispersion or emulsion.

2. Method according to claim 1, characterized in that the finish is applied to each side of the fabric with a weight per unit area of 50 to 60 g/m² (liquid).

3. Method according to claims 1 or 2, characterized in that aqueous emulsions or dispersions of the finish with a solids content of 40 to 50% are used.

4. Method according to one of the claims 1 to 3, characterized in that the liquid phase of the finish is preheated to a moderate temperature of e.g. 40 to 60°C prior to application to the fabric.

5. Method according to claim 4, characterized in that the weight per unit area of the finish applied is approximately 40 g/m² (liquid) on either side of the fabric.

6. Method according to one of the claims 1 to 5, characterized in that the heat activation of the composite fleece takes place at a composite fleece web speed of approximately 6 m/min at a temperature between 100 and 130°C.

7. Method according to one of the claims 1 to 6, characterized in that an aqueous phenolic resin solution is used for the finish.

8. Method according to one of the claims 1 to 7, characterized in that the phenolic resin finish is partially hardened during the heat activation of the composite fleece, whilst maintaining the flexibility of the fabric.

9. Method according to one of the claims 1 to 8, characterized in that the final curing of the phenolic resin finish takes place during the moulding of the moulded article.

10. Method according to one of the claims 1 to 6, characterized in that a styrene-butadiene latex (SBR latex) is used for the finish.

11. Method according to claim 10, characterized in that SBR latexes modified with phenolic resin, melamine resin, polyvinyl or polymethacrylate are used.

12. Method according to one of the claims 1 to 6, characterized in that butadiene-acrylonitrile copolymers, optionally in modified form are used for the finish.

13. Method according to one of the claims 1 to 6, characterized in that methacrylate-styrene copolymers are used for the finish.

14. Method according to one of the claims 1 to 3, characterized in that the finish, in the liquid state, additionally contains a foaming agent for foamed resin formation, whose decomposition temperature is above the composite fleece heat activation temperature, e.g. at 120 to 130°C and that the application of the finish optionally takes place with a weight per unit area higher than 20 to 30 g/m$^2$ (solid).

**Revendications**

1. Procédé pour la fabrication de nappes de fibres comme produit de départ pour articles moulés sous pression, dans lequel des matériaux réduits en pâte sont mélangés à des liants thermoplastiques ou thermodurcissables, le mélange étant dispersé pour former une première couche de matelas, un tissu fabriqué au préalable, par exemple un tissu en polyester, étant déposé sur cette couche avec un apprêt susceptible d'être activé par la chaleur, présentant une affinité avec le liant des fibres, une couche de matelas supplémentaire étant dispersée par dessus et le matelas composite ainsi formé étant comprimé, sous l'effet de l'activation thermique du liant et de l'apprêt, pour donner un matelas à partir duquel des produits moulés sous pression sont susceptibles d'être fabriqués par pressage à une température élevée, caractérisé en ce que l'apprêt composé de la phase liquide est appliqué, directement avant dépose du tissu (7), sur la première couche de matelas (4), par passage au rouleau ou par aspersion sur le tissu (7), et en ce que l'apprêt composé de la phase liquide, qui est appliqué sur le tissu (4), est séché à l'occasion de l'activation thermique du matelas composite et activé de son côté, l'apprêt étant introduit sous forme de phase aqueuse, à titre de solution, dispersion ou émulsion pure.

2. Procédé selon la revendication 1, caractérisé en ce que l'apprêt est appliqué de chaque côté du tissu, avec un poids surfacique allant de 50 à 60 g/m$^2$ (liquide).

3. Procédé selon la revendication 1 ou 2, caractérisé en ce que les émulsions, respectivement les dispersions aqueuses de l'apprêt sont utilisées avec une teneur en matières solides allant de 40 à 50 %.

4. Procédé selon l'une des revendications 1 à 3, caractérisé en ce que la phase liquide de l'apprêt est préchauffée à une température modérée, par exemple situé entre 40 et 60°C, avant application sur le tissu.

5. Procédé selon la revendication 4, caractérisé en ce que le poids surfacique de l'apprêt appliqué est d'à peu près 40 g/cm$^2$ (liquide), de chaque côté.

6. Procédé selon l'une des revendications 1 à 5, caractérisé en ce que l'activation thermique du matelas composite s'effectue à une vitesse de bande du matelas composite d'à peu près 6 m/min, à une température située entre 100 et 130°C.

7. Procédé selon l'une des revendications 1 à 6, caractérisé en ce que l'on utilise une solution aqueuse de résine phénolique pour l'apprêt.

8. Procédé selon l'une des revendications 1 à 7, caractérisé en ce que l'apprêt à résine phénolique est durci partiellement lors de l'activation thermique du matelas composite, tout en conservant la flexibilité du tissu.

9. Procédé selon l'une des revendications 1 à 8, caractérisé en ce que le durcissement final de l'apprêt à résine phénolique s'effectue lors du pressage de la pièce moulée.

10. Procédé selon l'une des revendications 1 à 6, caractérisé en ce qu'un latex styrène-butadiène (latex SBR) est utilisé pour l'apprêt.

11. Procédé selon la revendication 10, caractérisé en ce que l'on utilise des latex SBR modifiés à base de phénol ou de résine mélamine, de polyvinyl ou de polyméthacrylate.

12. Procédé selon l'une des revendications 1 à 6, caractérisé en ce que l'on utilise pour l'apprêtage des polymérisats mélangés à base de butadiène-acrylnitrile, sous une forme le cas échéant modifiée.

13. Procédé selon l'une des revendications 1 à 6, caractérisé en ce que l'on utilise pour l'apprêtage des polymérisats mélangés à base de méthacrylate-styrène.

14. Procédé selon l'une des revendications 1 à 3, caractérisé en ce que l'apprêt en phase liquide contient un agent moussant en vue de former une résine alvéolaire, dont la température de décomposition est située au-dessus de la température régnant lors de l'activation thermique, par exemple de 120 à 130°C, et en ce que l'application de l'apprêt s'effectue, le cas échéant, avec un poids surfacique supérieur à 20 à 30 g/cm$^2$ (solide).

FIG. 1

FIG. 2

FIG. 3

FIG. 4